# EUROPÄISCHE PATENTSCHRIFT

(11) **EP 2 742 905 B1**
(45) Veröffentlichungstag und Bekanntmachung des Hinweises auf die Patenterteilung: **18.07.2018**
(21) Anmeldenummer: 13004230.2
(22) Anmeldetag: 28.08.2013
(51) Int. Cl.: A61C 8/00

(54) **Dentalimplantat**
Dental implant
Implant dentaire

(30) Priorität: 13.12.2012 DE 102012024596
(43) Veröffentlichungstag der Anmeldung: 18.06.2014
(73) Patentinhaber: ZM Präzisionsdentaltechnik GmbH, 18055 Rostock (DE)
(72) Erfinder: Mitrovic, Milija, D-18055 Rostock (DE)
(74) Vertreter: Marschall, Stefan

(56) Entgegenhaltungen:
- EP-A1- 2 039 320
- EP-A1- 2 168 530
- WO-A1-98/00410
- WO-A1-99/55249
- DE-A1- 10 340 059
- DE-A1-102007 013 603
- DE-A1-102007 054 560
- DE-A1-102011 015 299

## Beschreibung

Die Erfindung betrifft ein Dentalimplantat, bei dem zumindest die Außenfläche aus einem keramischen Werkstoff, insbesondere Zirkoniumdioxid oder einer anderen Hochleistungskeramik, besteht, dessen Verankerungsteil zur Verankerung im Kieferknochen ausgebildet ist und das mit einer konisch ausgebildeten Aufnahme versehen ist, an der eine prothetische Überkonstruktion befestigbar ist, wobei das Implantat eine durchgehende Längsbohrung aufweist, in die eine metallische Hülse eingesetzt ist, in die vom okklusalen Ende her eine Schraube zur Fixierung der Überkonstruktion einsetzbar ist.

In der DE 101 59 683 A1 ist ein einteiliges Dentalimplantat beschrieben, das in der zahnärztlichen Therapie Verwendung findet, um erkrankte oder fehlende Zähne vollständig zu ersetzen. Derartige Dentalimplantate können sowohl im kosmetisch relevanten sichtbaren Vorder- und Seitenzahnbereich eingesetzt werden wie auch als Halteelement für herausnehmbaren Zahnersatz oder für Spezialanwendungen, beispielsweise in der Kieferorthopädie.

Andererseits kann der perfekte Sitz implantatgetragener weitspanniger Brückenkonstruktionen dadurch erheblich erschwert werden, daß sich bei der Umsetzung vom Abdruck zum Modell kleine material-, system- und verarbeitungstechnisch bedingte Fehler summieren und es in der Folge beim anschließenden Einsetzen der Brückenkonstruktion deshalb zu Spannungszuständen kommen kann. Während sich diese Spannungen auf natürlichen Pfeilern in der Regel schon nach wenigen Minuten legen, da sich die Zähne an der Brückenposition ausrichten, ist dies bei Implantatversorgungen nicht der Fall. Um dennoch die erforderliche Spannungsfreiheit zu erreichen, werden zwischen den Implantaten und dem darauf zu befestigenden Brückengerüst vorgefertigte dentale Verbindungselemente eingebracht, die auch als PassivFit-Kappen bezeichnet werden. Die Verwendung solcher Verbindungselemente oder Kappen ist insbesondere bei einer späteren intraoralen adhäsiven Verankerung angezeigt, da durch sie mit einfachen Mitteln ein spannungsfreier Sitz, ein Passiv-Fit, des implantatgetragenen Zahnersatzes erreicht werden kann. Dieser spannungsfreie Sitz gewährleistet den Langzeiterfolg der Implantatversorgung, da er einen Knochenabbau um die Implantate herum oder gar einen Verlust der Implantate zuverlässig zu verhindern vermag.

So ist in der WO99/55249 ein einteiliges Dentalimplantat der eingangs genannten Art beschrieben, das ein konisches Abutment sowie eine daran zu befestigende Überkonstruktion aufweist. Ferner ist in dieser Druckschrift ein zweiteiliges Dentalimplantat beschrieben, in das vom okklusalen Ende her eine Schraube eingesetzt ist, mit deren Hilfe ein konisch ausgebildetes Abutment in einem mit einem Gewinde versehenen Bereich der im Inneren des keramischen Trägerteiles angeordneten Hülse befestigbar ist.

Gleiches gilt für ein in der DE 103 40 059 A1 beschriebenes zweiteiliges Dentalimplantat, bei dem mittels einer Schraube ein ebenfalls konisch ausgebildetes Abutment an einer im Fall dieser Anordnung retrograd eingeführten Gewindehülse befestigt wird.

Aufgabe der Erfindung ist es, ein Dentalimplantat der eingangs genannten Art so auszubilden, daß auch bei einem einteiligen vollkeramischen Implantat auf zuverlässige Weise die intraorale Verankerung einer implantatgetragenen Überkonstruktion mit spannungsfreiem Sitz gewährleistet ist, wobei eine retrograde Einführung einer metallischen Gewindehülse möglich sein und der Sitz dieser Hülse eine größtmögliche mechanische Festigkeit aufweisen soll.

Die Erfindung ist in Anspruch 1 definiert. Die Erfindung löst diese Aufgabe dadurch, daß bei einem derartigen Dentalimplantat eineGewindehülse vom retrograden Ende des Implantates her einsetzbar und an einem Anschlag festlegbar ist und die retrograde Öffnung anschließend verschließbar ist, und daß das Implantat an seinem okklusalen Ende mit einer zwischen dem Implantat und der Überkonstruktion angeordneten Konuskappe versehen ist.

In vorteilhafter Weiterbildung des Dentalimplantates nach der Erfindung besteht die metallische Hülse aus einem Titanwerkstoff und wird in der keramischen Implantataussenhülle vorzugsweise durch Löten mit einem Glaslot befestigt. Die äußere Oberfläche der Implantataussenhülle ist zumindest in Teilbereichen mit einer Glasmatrix beschichtet und wird vorzugsweise durch ein abtragendes Verfahren strukturiert, um eine optimale Osseointegration zu ermöglichen. Es zeigen:
- Fig. 1: einen Front- und Seitenzahnersatz mit zwei divergierenden Implantaten,
- Fig. 2: ein erstes Implantat in einer teilweise geschnittenen Darstellung,
- Fig. 3: einen Schnitt durch die in Fig. 2 dargestellte Anordnung in Explosionsdarstellung,

- Fig. 4-6: drei verschiedene Ausführungen einer Gewindehülse jeweils in perspektivischer Darstellung.

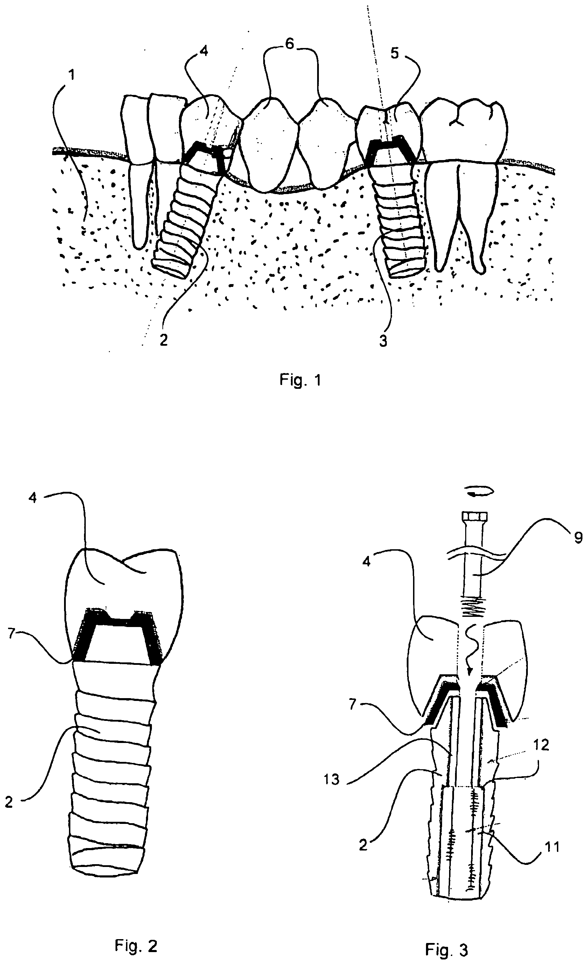

Die Darstellung gemäß Fig. 1 zeigt einen Schnitt durch den Unterkiefer 1 eines Patienten mit einem Zahnersatz, der auf zwei zueinander divergierenden Implantaten 2, 3 mit einem jeweils konischem Verankerungsbereich und einer Konuskappe 7, 8 aufgebaut ist. Die beiden Implantate 2 und 3 sind jeweils einteilig aufgebaut und bestehen aus einem keramischen Werkstoff, im Fall des hier beschriebenen Ausführungsbeispiels Zirkoniumdioxid, ZrO₂, wobei das Material aber auch aus einer anderen Hochleistungskeramik bestehen kann.

Auf der Außenfläche der Implantate 2, 3 befindet sich eine Beschichtung aus einem Glaslot, die, wie in den Figuren 1 bis 5 dargestellt ist, jeweils derart strukturiert ausgebildet ist, daß sie das Anwachsen des Knochen nachhaltig verbessert. Ferner sind die Implantate 2, 3 jeweils mit einer Aufnahme versehen, an der eine Überkonstruktion als Zahnersatz befestigbar ist, der im Fall des hier beschriebenen Ausführungsbeispiels aus jeweils einer Krone 4, 5 sowie einer zwischen diesen beiden Kronen 4 und 5 angeordneten, im Fall des hier dargestellten Ausführungsbeispiels zweigliedrigen Brücke 6 besteht.

Der Zahnersatz ist an beiden Implantaten jeweils auf eine Konuskappe 7, 8 aufgesetzt und ist mit dieser verlötet, zementiert oder verklebt. Die Verschraubung des Zahnersatzes in den beiden Implantaten 2 und 3 wird durch die in diesen befestigten Konuskappen 7, 8 realisiert.

Das Material der Konuskappen 7, 8 kann aus Zirkoniumdioxid, ZrO₂, aus einer anderen Hochleistungskeramik oder aus Titan bestehen. Auf der Außenfläche der Konuskappen 7, 8 befindet sich jeweils eine Vorbeschichtung aus einem Glaslot, die eine Verlötung mit dem Zahnersatz ermöglicht. Sie kann aber auch strukturiert ausgebildet sein, um eine Verklebung oder Zementierung zu ermöglichen bzw, zu verbessern. Der Verankerungsbereich der Konuskappen 7, 8 ist konisch ausgebildet mit einem Konuswinkel zwischen 0° und 35°, um Differenzen auszugleichen, wobei die Konuskappen auf ihrem Verankerungsbereich mit dem jeweiligen Implantat 2, 3 mittels einer Schraube 9, 10 verschraubt oder aber zementiert bzw. geklebt sind. Die Konuskappen 7, 8 fungieren dabei zugleich als Passiv-Fit Käppchen und dienen auf diese Weise dem Spannungsausgleich zwischen dem jeweiligen Implantat 2, 3 und dem Zahnersatz bzw. der Überkonstruktion.

Der im Kieferknochen 1 befindliche Anteil der jeweils einteilig ausgebildeten Implantate 2, 3 ist auf seiner Außenfläche jeweils mit einem Gewinde zur Verankerung im Kieferknochen 1 versehen. Dieser Verankerungsbereich der Implantate 2, 3 ist außerdem mit einem Glaslot beschichtet und für eine Verklebung bzw. für eine Zementierung strukturiert ausgebildet. Außerdem weist er eine wohldefinierte Höhe im Verhältnis zum Implantatkörper auf.

Bei dem in den Figuren 2 und 3 dargestellten Ausführungsbeispiel ist jedes der einteiligen Implantate 2, 3 jeweils mit einer basalen Öffnung zur retrograden Aufnahme einer Gewindehülse 11 versehen. Im Inneren des hier dargestellten Implantates 2 befindet sich ein Anschlag 12 für die Gewindehülse 11, um einen definierten Stopp für die Hülse zu gewährleisten. Eine okklusale Öffnung im Verankerungsbereich des Implantates 2 ermöglicht bei dieser Ausführungsform die Aufnahme der Schraube 9 zur Befestigung der Konuskappe 7.

Die Gewindehülse 11 und die Schraube 9 bestehen jeweils aus Titan. Zwischen der Gewindehülse 11 und der Innenseite des Implantates 2 befindet sich ferner ein definierter Spalt, um den ungehinderten Fluß des Glaslotes zu ermöglichen. Diese Innenseite und die Titankomponenten sind mit Glaslot vorbeschichtet, das entweder der eigentlichen Verlötung der Teile oder aber einer sicheren Verlötung durch zusätzlich eingebrachtes Lot dient. Die basale Öffnung des Implantates 2 wird entweder mit Glaslot oder mit einem sogenannten Inlay aus Zirkoniumdioxid, ZrO₂, oder aus einer anderen Hochleistungskeramik verschlossen, so daß das Titan maximal vom Zirkoniumdioxid bzw. einer anderen Hochleistungskeramik umschlossen ist.

Die Konuskappen 7 bestehen entweder aus Titan, aus Zirkoniumdioxid, ZrO₂, oder aus einer anderen Hochleistungskeramik. Sofern die Konuskappen 7 und 8 aus Zirkoniumdioxid, ZrO₂, oder aus einer anderen Hochleistungskeramik bestehen, sind sie auf ihrer Innenseite mit Glaslot beschichtet, um für eine Verklebung oder Zementierung strukturiert werden zu können. Ihre Außenfläche ist in jedem Fall ebenfalls mit Glaslot vorbeschichtet, um auch hier Strukturierung, eine Verklebung oder Zementierung sowie die Verlötung mit dem Zahnersatz zu ermöglichen. Ferner weisen die Konuskappen 7 und 8, wie dies in den Figuren 2 bis 5 erkennbar ist, okklusal jeweils eine Öffnung auf, die als Anschlag für den Kopf der Schrauben 9 bzw. 10 ausgebildet ist und damit eine sichere Verschraubung des Zahnersatzes ermöglicht. Schließlich sind die Außenflächen der Konuskappen 7 und 8 konisch ausgebildet und können gegebenenfalls nachträglich individualisiert werden.

Die Verankerungsbereiche der einteiligen Implantate 2 und 3 im Kieferknochen 1 sind jeweils konisch ausgebildet und mit Glaslot vorbeschichtet, um eine Strukturierung zur Verklebung oder Zementierung zu ermöglichen.

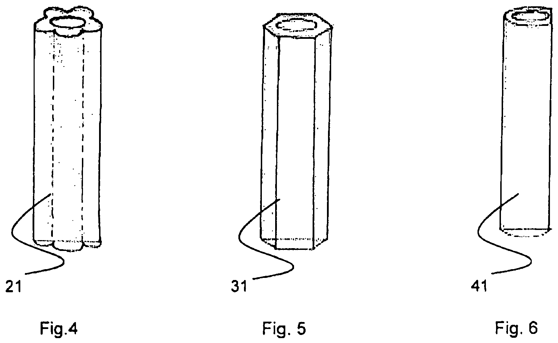

Schließlich zeigen die Figuren 4 bis 6 jeweils in perspektivischer Darstellung verschiedene äußere Formgebungen 21, 31, 41 der Gewindehülsen 11 bzw. 14 für ein einteiliges keramisches Dentalimplantat 2, 3. In jedem der dargestellten Fälle ist die äußere Form dieser Gewindehülsen so ausgebildet, daß sie im Zusammenwirken mit einer entsprechenden Formgebung der Innenseite des keramischen Dentalimplantates einen Rotationsschutz bietet und bereits dadurch eine sichere Fixierung innerhalb des Implantates 2, 3 gewährleistet ist.

## Patentansprüche

1. Einteiliges Dentalimplantat (2), bei dem zumindest die Außenfläche aus einem keramischen Werkstoff besteht, dessen Verankerungsteil zur Verankerung im Kieferknochen ausgebildet ist und das an seinem okklusalen Ende mit einem als Außenkonus ausgebildeten konischen Verankerungsbereich zur Aufnahme einer prothetische Überkonstruktion versehen ist, **dadurch gekennzeichnet, dass** das Implantat (2) eine Bohrung aufweist, in der eine metallische Gewindehülse (11) retrograd aufgenommen ist und die an einem Anschlag (12) im Innern des Dentalimplantats (2) festgelegt ist, wobei in das okklusale Ende der Bohrung eine Schraube (9) für die Fixierung der Überkonstruktion (4) einsetzbar ist, und wobei zwischen dem konischen Verankerungsbereich und der Überkonstruktion (4) eine Konuskappe (7) angeordnet ist, mit der die Überkonstruktion (4) verlötet, zementiert oder geklebt ist und die mittels der Schraube (9) auf dem Verankerungsbereich mit dem Implantat (2) verschraubbar ist.

2. Einteiliges Dentalimplantat nach Anspruch 1, **dadurch gekennzeichnet, dass** das Implantat (2) aus Zirkoniumdioxid oder einer seiner Varianten besteht.

3. Einteiliges Dentalimplantat nach einem der Ansprüche 1 oder 2, **dadurch gekennzeichnet, dass** die Gewindehülse (11} aus einem Titanwerkstoff besteht.

4. Einteiliges Dentalimplantat nach einem der Ansprüche 1 bis 3, **dadurch gekennzeichnet, dass** die Gewindehülse (11) im Implantat (2) mittels Löten befestigt ist.

5. Einteiliges Dentalimplantat nach einem der Ansprüche 1 bis 4, **dadurch gekennzeichnet, dass** die äußere Oberfläche des Implantates (2) strukturiert ausgebildet ist.

6. Einteiliges Dentalimplantat nach einem der Ansprüche 1 bis 5, **dadurch gekennzeichnet, dass** zumindest Teilbereiche der äußeren Oberfläche des Implantates (2) mit einer Glasmatrix beschichtet sind, die durch ein abtragendes Verfahren strukturierbar ist.

7. Einteiliges Dentalimplantat nach einem der Ansprüche 1 bis 6, **dadurch gekennzeichnet, dass** die Außenfläche der Gewindehülse (11) derart ausgebildet ist, dass die Gewindehülse (11) gegenüber dem Implantat (2) verdrehsicher einsetzbar ist.

## Claims

1. A one-piece dental implant (2), wherein at least the outer surface consists of a ceramic substance, its anchoring portion being configured to be anchored in the jawbone and wherein it is provided at its occlusal end with a tapered anchoring region configured as an external taper in order to accommodate a prosthetic superstructure, **characterized in that** the implant (2) is provided with a bore in which a metallic threaded sleeve (11) has been retro-fitted and which is fastened to a stop (12) in the interior of the dental implant (2), wherein a screw (9) for fixing the superstructure (4) can be inserted into the occlusal end of the bore, and wherein a taper cap (7) is disposed between the tapered anchoring region and the superstructure (4), with which the superstructure (4) is soldered, cemented or bonded and which can be screwed by means of the screw (9) onto the anchoring region with the implant (2).

2. The one-piece dental implant as claimed in claim 1, **characterized in that** the implant (2) consists of zirconium dioxide or a variation thereof.

3. The one-piece dental implant as claimed in claim 1 or claim 2, **characterized in that** the threaded sleeve (11) consists of a titanium substance.

4. The one-piece dental implant as claimed in one of claims 1 to 3, **characterized in that** the threaded sleeve (11) is fixed in the implant (2) by means of soldering.

5. The one-piece dental implant as claimed in one of claims 1 to 4, **characterized in that** the outer surface of the implant (2) has a structured configuration.

6. The one-piece dental implant as claimed in one of claims 1 to 5, **characterized in that** at least parts of the external surface of the implant (2) are coated with a glass matrix which can be structured by means of an ablative process.

7. The one-piece dental implant as claimed in one of claims 1 to 6, **characterized in that** the outer surface of the threaded sleeve (11) is configured in a manner such that the threaded sleeve (11) can be inserted in a manner such that it cannot be turned with respect to the implant (2).

## Revendications

1. Implant dentaire monobloc (2), dans lequel au moins la surface extérieure est composée d'un matériau céramique dont la pièce d'ancrage est conçue pour être ancrée dans l'os maxillaire et qui est pourvu à son extrémité occlusale d'une zone d'ancrage conique réalisée sous forme d'un cône extérieur et destinée à recevoir une superstructure prothétique, **caractérisé en ce que** l'implant (2) présente un alésage dans lequel un manchon fileté métallique (11) est reçu dans le sens arrière et qui est fixé à une butée (12) à l'intérieur de l'implant dentaire (2), une vis (9) pour la fixation de la superstructure (4) pouvant être insérée dans l'extrémité occlusale de l'alésage, et étant disposé, entre la zone d'ancrage conique et la superstructure (4), un capuchon conique (7) auquel la superstructure (4) est brasée, cimentée ou collée et qui peut être vissé à l'implant (2) au moyen de la vis (9) sur la zone d'ancrage.

2. Implant dentaire monobloc selon la revendication 1, **caractérisé en ce que** l'implant (2) est composé de dioxyde de zirconium ou d'une de ses variantes.

3. Implant dentaire monobloc selon une des revendications 1 ou 2, **caractérisé en ce que** le manchon fileté (11) est composé d'un matériau à base de titane.

4. Implant dentaire monobloc selon une des revendications 1 à 3, **caractérisé en ce que** le manchon fileté (11) est fixé par brasage dans l'implant (2).

5. Implant dentaire monobloc selon une des revendications 1 à 4, **caractérisé en ce que** la surface extérieure de l'implant (2) a une conformation structurée.

6. Implant dentaire monobloc selon une des revendications 1 à 5, **caractérisé en ce qu'**au moins des sous-parties de la surface extérieure de l'implant (2) sont revêtues d'une matrice en verre qui peut être structurée par un procédé d'abrasion.

7. Implant dentaire monobloc selon une des revendications 1 à 6, **caractérisé en ce que** la surface extérieure du manchon fileté (11) est conçue de manière à ce que le manchon fileté (11) puisse être inséré de manière à être fixe en rotation par rapport à l'implant (2).
